# EUROPÄISCHE PATENTSCHRIFT

(11) **EP 0 703 816 B1**
(45) Veröffentlichungstag und Bekanntmachung des Hinweises auf die Patenterteilung: **07.01.1999**
(21) Anmeldenummer: 95909717.1
(22) Anmeldetag: 14.02.1995
(51) Int. Cl.: B01D 21/06, B01D 21/24

(54) **RUNDKLÄRBECKEN MIT EINEM RÄUMER**
CIRCULAR SETTLEMENT RANK WITH SCRAPER
BASSIN DE DECANTATION CIRCULAIRE AVEC UN RACLEUR

(30) Priorität: 13.04.1994 DE 4412647
(43) Veröffentlichungstag der Anmeldung: 03.04.1996
(73) Patentinhaber: Hans Huber GmbH Maschinen- und Anlagenbau, D-92334 Berching (DE)
(72) Erfinder: HUBER, Hans, Georg, D-92334 Berching (DE); KÖHLER, Rainer, D-92318 Neumarkt (DE)
(74) Vertreter: Rehberg, Elmar, Dipl.-Ing.
(86) Internationale Anmeldenummer: EP9500528
(87) Internationale Veröffentlichungsnummer: WO9528214

(56) Entgegenhaltungen:
- WO-A-93/21111
- WO-A-94/01191
- US-A- 1 357 587
- US-A- 3 437 212
- US-A- 3 919 090
- US-A- 5 047 151

## Beschreibung

Die Erfindung bezieht sich auf ein Rundklärbecken mit einem Räumer mit den im Oberbegriff des Anspruchs 1 angegebenen Merkmalen. Solche Rundklärbecken werden insbesondere in der Klärtechnik benutzt, um einerseits eine Sedimentation des Sinkschlammes herbeizuführen und diesen aus dem Rundklärbecken abzuziehen. In solchen Rundklärbecken entsteht jedoch auch Schwimmschlamm, der ebenfalls abgezogen werden muß.

Ein Rundklärbecken mit einem Räumer der eingangs beschriebenen Art ist aus der US-A-1,357,587 bekannt. Das Rundklärbecken wird von einem brückenartigen Bauwerk überspannt, auf dem mittig zum Rundklärbecken der mittige Antrieb für eine Baueinheit aus einem Rahmen, einer Räumeinrichtung für den Sinkschlamm und einem Schwimmschlammräumschild untergebracht ist. Das Schwimmschlammräumschild ist bogenartig ausgebildet und erstreckt sich von innen in radialer Richtung nach außen, wobei es im Abstand zu Einbauten für die Zufuhr der mit Schlamm beladenen Flüssigkeit und den Abzug des Klarwassers endet. Das Schwimmschlammräumschild arbeitet mit einem ebenfalls gebogen ausgebildeten Abstreifschild zusammen, welches ortsfest angeordnet ist und sich nur über einen kleinen Teil des Radius des Rundklärbeckens erstreckt, sodaß davon nur ein Teil des Schwimmschlamms erfasst, zusammengeschoben und in einen Abzugstrichter gefördert wird. Auch der Sinkschlamm gelangt in diesen Abzugstrichter, sodaß Schwimmschlamm und Sinkschlamm nur gmeinsam abgezogen werden können. Die Oberfläche des Rundklärbeckens wird nur zu einem Teil für die Abscheidung des Schwimmschlamms genutzt. Die Durchströmung des Rundklärbeckens ist nicht radialsymmetrisch. Es ist ein aufwendiges Mittenbauwerk erforderlich.

Die US-A-3,919,090 zeigt ein Rundklärbecken mit einer mittigen Zufuhr für die mit Schlamm beladene Flüssigkeit, sodaß sich eine symmetrische Durchströmung des Rundklärbeckens ergibt. Das Schwimmschlammräumschild und das Abstreifschild erstrecken sich in radialer Richtung bis zu einer Überfallwand, die die nutzbare Oberfläche begrenzt. Ein sich in radialer Richtung nach außen anschließender Überlauf für das Klarwasser erstreckt sich bis zur Seitenwandung des Rundklärbeckens.

Aus der DE 42 22 559 A1 ist ein Räumer zum Abzug des Sinkschlamms bekannt. Dieser Räumer weist einen unterhalb der Wasseroberfläche vorgesehenen Rahmen auf, an dem ein Antrieb radial außen oder radial innen etwa im Bereich einer als Räumschild ausgebildeten Räumeinrichtung angreift. Der Antrieb wird über einen Zahnkranz oder ein anderes Übertragungsmittel auf die Baueinheit aus Rahmen und Räumeinrichtung für den Sinkschlamm übertragen. Der wesentliche Vorteil dieses Räumers besteht darin, daß auf die Anordnung und Ausbildung einer Brücke und eines aufwendigen Mittelbaus verzichtet werden kann, weil der Räumer weitgehend nur solche Teile aufweist, die sich unterhalb der Wasseroberfläche befinden. Auch wird die Beckenwandung in ihrem oberen Bereich frei von solchen Belastungen gehalten, die ansonsten mit einer verfahrbaren Brücke zwangsläufig verbunden sind. Der bekannte Räumer sieht jedoch keine Möglichkeit vor, Schwimmschlamm abzuziehen.

Aus der DE 33 45 868 A1 ist ein Verfahren und eine Vorrichtung zur Schwimmschlammräumung bekannt, bei der zwei unabhängig voneinander antreibbare Brücken einerseits auf einem Mittelbauwerk und andererseits auf der Beckenkrone des Rundklärbeckens gelagert bzw. verfahrbar sind. Die in Umlaufrichtung vorauseilende Brücke trägt ein Stauschild, welches in die Schwimmschlammdecke abgesenkt und aus dieser herausgehoben werden kann. Auf der nacheilenden Brücke ist ein Schwimmschlammräumschild sowie ein angetriebener Querförderer vorgesehen. Die beiden Brücken und die beiden Schilde erstrecken sich gradlinig etwa radial zum Rundklärbecken. Durch Stillsetzen der ersten, das Stauschild tragenden Brücke und durch Absenkung des Stauschildes in die Schwimmschlammdecke hinein wird verhindert, daß beim nachfolgenden Heranfahren der nacheilenden Brücke mit dem Schwimmschlammräumschild die Schwimmschlammdecke im Kreis gefördert wird. Sie wird vielmehr zwischen den Schilden zusammengeschoben. Anschließend wird der Querförderer, der über einen eigenen Antrieb verfügt und einen sich tangential zum Rundklärbecken erstreckenden Räumbalken trägt, in Tätigkeit gesetzt, um den Schwimmschlamm radial nach innen zu fördern. Der Schwimmschlamm gelangt in eine Tasche, aus der er mit Hilfe einer Pumpe in eine am Mittelbauwerk vorgesehene Rinne überführt wird. An der nacheilenden Brücke kann auch ein Räumschild für die Sinkschlammräumung aufgehängt sein, welches im Bereich der Beckensohle arbeitet. Dieser bekannte Räumer ermöglicht zwar vorteilhaft den Abzug des Schwimmschlammes einerseits und den Abzug des Sinkschlammes andererseits; er setzt jedoch ein aufwendig gestaltetes Mittelbauwerk voraus. Der doppelte Aufwand für die zwei Räumerbrücken mit deren Antrieben ist ebenfalls erheblich. Zudem kann noch nicht einmal die gesamte Fläche, auf der sich Schwimmschlamm ansammelt, mit dem Querförderer bedient werden, weil die Tasche einerseits sowie Antriebselemente für den Querförderer andererseits infolge Ihrer Anordnung dies nicht zulassen, so daß wiederum die zusätzliche Anordnung von Leitblechen erforderlich wird.

Der Erfindung liegt die Aufgabe zugrunde, ein Rundklärbecken mit einem Räumer der eingangs beschriebenen Art, der also ohne Mittelbauwerk auskommt, so weiterzubilden, daß mit ihm in einfacher Weise einerseits Sinkschlamm und andererseits Schwimmschlamm getrennt voneinander abgezogen werden können und bei dem möglichst die gesamte Wasseroberfläche des Rundklärbeckens zur Abscheidung des Schwimmschlamms genutzt werden kann.

Erfindungsgemäß wird dies bei dem Rundklärbecken mit einem Räumer der eingangs beschriebenen Art dadurch erreicht, daß die Vorrichtung einen in der Mitte des Rundklärbeckens angeordneten und nach oben offenen Einführtrichter für die mit Schlamm beladene Flüssigkeit aufweist, daß sich die beiden Schilde in radialer Richtung bis zur Seitenwandung des Rundklärbeckens erstrecken, sodaß der Schwimmschlamm auf der gesamten Oberfläche des Rundklärbeckens durch die scherenartige Überdeckungswirkung zwischen dem Schwimmschlammräumschild und dem Abstreifschild zusammengeschoben und in einen Abzugstrichter gefördert wird, und daß der Rahmen der Baueinheit an seinem sich radial nach außen erstreckenden Endbereich einen Freiraum für die ortsfeste Anordnung eines dem Abzug des Klarwassers dienenden Tauchrohres unterhalb des Wasserspiegels aufweist.

Die Erfindung geht von dem Gedanken aus, eine weitgehend unter Wasser angeordnete Baueinheit zu schaffen, die nicht nur den dort gelagerten Rahmen, die Räumeinrichtung für den Sinkschlamm und ein Schwimmschlammräumschild aufweist, sondern bei der zusätzlich noch in einem sich radial nach außen erstreckenden Endbereich ein Freiraum für die ortsfeste Anordnung eines dem Abzug des Klarwassers dienenden Tauchrohres unterhalb des Wasserspiegels gebildet ist. Das Schwimmschlammräumschild erstreckt sich vorteilhaft über das Tauchrohr radial hinaus bis zur Wandung des Rundklärbeckens, so daß die gesamte Wasseroberfläche von Schwimmschlamm abgeräumt wird. Dennoch wird der Abzug des Klarwassers über das ortsfestes Tauchrohr nicht behindert. An dem unter dem Wasserspiegel angeordneten Tauchrohr ist die Gefahr des Algenwachstums reduziert. Auch wenn das Rundklärbecken eine unrund verlaufende Seitenwandung aufweist, wie dies oft vorkommt, wird die Funktion der zwangsweisen Schwimmschlammräumung einerseits und der Abfuhr des Klarwassers hierdurch nicht behindert. Ein aufwendiges Mittelbauwerk in der Mitte des Rundklärbeckens erübrigt sich. Trotzdem erfassen die beiden Schilde die gesamte Oberfläche des Rundklärbeckens, weil sie beide jeweils radial bis zur Seitenwandung durchgehend vorgesehen sind. Die Beckenkrone des Rundklärbeckens bleibt völlig frei von der Belastung durch verfahrbare Brücken. Dadurch, daß der neue Räumer kein Mittelbauwerk benötigt, vereinfacht sich die Gestaltung in der Mitte des Rundklärbeckens. Dort muß lediglich die Zufuhr für den Frischschlamm, beispielsweise mit Hilfe eines nach oben offenen, sich erweiternden Einführtrichters, durchgeführt werden. Die hierfür erforderlichen Elemente und Rohrleitungen können ohne weiteres untergebracht werden. Durch den sich nach oben öffnenden Einführtrichter - insbesondere bei einer Ausbildung als Coanda-Tulpe - erfolgt eine gleichmäßige Verteilung der mit dem Schlamm beladenen Flüssigkeit über das Rundklärbecken ohne die Trennung der Sinkstoffe und der Schwimmstoffe zu behindern. Durch die Einbringung und Verteilung der Flüssigkeit nach oben und radial außen wird vermieden, daß eine Kurzschlußströmung in den Abzugstrichter für den Sinkschlamm hinein erfolgt. Weiterhin ist vorteilhaft, daß der Unterwasserräumer eine sehr geringe Anzahl Einzelteile aufweist, die zudem noch preiswert herstellbar sind. Die Beckenkrone bleibt unbelastet. Auch der Antrieb ist einfach aufgebaut. Der Motor ist über Wasser angeordnet und ist handelsüblich. Der neue Räumer gestattet auch einen problemlosen Winterbetrieb. Der Antrieb ist nicht von Reibungsverhältnissen auf der Beckenkrone abhängig. Bei dem neuen Unterwasserräumer ist es ohne weiteres möglich, die Anzahl der Schwimmschlammräumschilde einerseits und/oder der Schilde für die Räumung des Sinkschlamms andererseits zu erhöhen.

In einer besonderen Ausführungsform weisen das Schwimmschlammräumschild und/oder das Abstreifschild eine derart gekrümmte oder abgewinkelte Form aufweisen, daß beim Umlauf des Schwimmschlammräumschildes die scherenartige Überdeckungswirkung zwischen den beiden Schilden radial außen am Rundklärbecken beginnt und radial innen endet. Damit wird auch ohne ein separates, in radialer Richtung von außen nach innen angetriebenes Querförderelement dennoch durch die scherenartige Überdeckungswirkung zwischen den beiden Schilden eine Verdichtungs- und Förderwirkung auf den Schwimmschlamm ausgeübt, der hier radial nach innen gerichtet ist, so daß die beabsichtigte Förderwirkung und der mittige Abzug möglich werden. Besonders einfach ist es, wenn das Schwimmschlammräumschild die beschriebene Form aufweist, weil dann bereits während eines Umlaufes die beabsichtigte, nach innen gerichtete Förderwirkung auf den Schwimmschlamm ausgeübt wird, die sich bei Annäherung an das Abstreifschild dann noch verstärkt.

Es ist aber auch möglich, daß das Schwimmschlammräumschild und/oder das Abstreifschild eine derart gekrümmte oder abgewinkelte Form aufweisen, daß beim Umlauf des Schwimmschlammräumschildes die scherenartige Überdeckungswirkung zwischen den beiden Schilden radial innen am Rundklärbecken beginnt und radial außen endet. Diese Anordnung kann die Abfuhr des Schwimmschlamms erleichtern. Dennoch wird eine doppelte Randausbildung vermieden.

Am Schwimmschlammräumschild und/oder am Abstreifschild können an den einander zugekehrten Rändern des jeweiligen Schildes elastische Elemente vorgesehen sein, die den Rand des jeweils anderen Schildes überdecken. Selbstverständlich müssen die festen, unnachgiebigen Teile des Schwimmschlammräumschildes und des Abstreifschildes so angeordnet sein, daß das ortsfeste Abstreifschild den Umlauf des Schwimmschlammräumschildes nicht behindert. Dies bedeutet, daß die beiden Schilde sich im Bereich einer Horizontalebene in vertikaler Richtung nicht überdecken dürfen. Eine solche Überdeckung ist jedoch möglich, wenn elastische Elemente eingesetzt werden, so daß das Abstreifschild vergleichsweise tiefer in den Schwimmschlamm oder das Schwimmschlammräumschild entsprechend höher in den Schwimmschlamm eingreifen können. Diese elastischen Elemente gestatten dann den Durchlauf des Schwimmschlammräumschildes unter dem ortsfest angeordneten Abstreifschild. Als ein solches elastisches Element kann eine Bürste, eine Fingerleiste o. dgl. vorgesehen sein. Auch stabartige Elemente aus Kunststoff o. dgl. können vorgesehen sein. Es ist auch möglich, die beiden Schilde in ihren Randbereichen mit entsprechenden Ausnehmungen zu versehen, so daß eine kammartige Form entsteht, die einerseits den tiefen Einschnitt in die Decke des Schwimmschlammes ermöglicht und andererseits das Vorbeilaufen des Schwimmschlammräumschildes an dem Abstreifschild nicht behindert.

An dem mittigen Abzugstrichter kann ein Abzugsventil vorgesehen sein. Ein solches Abzugsventil besteht in seiner einfachsten Form aus einer Öffnung am Abzugstrichter und einer darauf abgestimmten Öffnung an einer Wandung des Schwimmschlammräumschildes. Die beiden Öffnungen sind so aufeinander abgestimmt und angeordnet, daß das Ventil nur in einem gewissen Winkelbereich vor Erreichen des Abstreifschildes geöffnet ist, während über einen großen Umlaufbereich des Schwimmschlammräumschildes dieses Abzugsventil geschlossen ist.

Die Baueinheit aus Rahmen, Räumeinrichtung für den Sinkschlamm und das Schwimmschlammräumschild kann einen Zahnkranz, eine Endloskette o. dgl. aufweisen, über die der Antrieb von einem oberhalb des Wasserspiegels. also oberhalb der Oberfläche der mit Schlamm beladenen Flüssigkeit, angeordneten Motor auf die Baueinheit übertragen wird. Es ist damit nur ein einziger Antrieb erforderlich, der beispielsweise über einen ortsfest angeordneten Motor und eine vertikale Antriebswelle auf den Zahnkranz oder ein System mit einer Zahnkette übertragen wird.

Die Baueinheit aus Rahmen, Räumeinrichtung für den Sinkschlamm und das Schwimmschlammräumschild können auf dem mittigen Einführtrichter geführt sein. Es versteht sich, daß die Baueinheit darüberhinaus im Bereich der Beckensohle gelagert und geführt ist, und zwar radial innen und außen. Eine gesonderte Führung für das Schwimmschlammräumschild radial außen, also im Bereich der Beckenwandung, erübrigt sich.

Eine andere Möglichkeit der Querförderung, die aber auch kumulativ zu der scherenartigen Überdeckungswirkung vorgesehen sein kann, ist dann gegeben, wenn beispielsweise ein antreibbarer Querförderer mit einer Förderschnecke auf dem Rahmen vorgesehen ist. Ähnlich wie ein solcher Querförderer mit einer Förderschnecke als Bestandteil der Räumeinrichtung für den Sinkschlamm vorgesehen sein könnte, könnte auch im oberen Bereich, also im Bereich der Schwimmschlammdecke, ein solcher weiterer Querförderer vorgesehen sein. Dieser Querförderer ist ebenfalls auf dem Rahmen angeordnet und befindet sich in Umlaufrichtung vor dem Schwimmschlammräumschild. Ein solcher Querförderer verfügt über einen separaten Antrieb, der bevorzugt dann in Tätigkeit gesetzt wird, wenn die Baueinheit aus Rahmen und Räumschild in einer gewissen Entfernung von dem ortsfesten Abstreifschild stillgesetzt wird. Mit einem solchen Querförderer ist eine besonders intensive Abräumung des Schwimmschlammes möglich.

Es ist auch möglich, mehrere ortsfeste Abstreifschilde über das Rundklärbecken verteilt vorzusehen, wenn die Abzugswirkung intensiviert und bei jedem Umlauf des Schwimmschlammräumschildes mehrfach erfolgen soll.

Die Erfindung wird anhand bevorzugter Ausführungsbeispiele weiter beschrieben und erläutert. Es zeigen:
- Figur 1: einen Vertikalschnitt durch ein Rundklärbecken mit den wesentlichen Teilen des Räumers,
- Figur 2: eine Draufsicht auf das Rundklärbecken, teilweise geschnitten, mit dem Räumer,
- Figur 3: eine ähnliche Darstellung wie Figur 2 zur prinzipiellen Verdeutlichung,
- Figur 4: eine prinzipielle Verdeutlichung einer abgewandelten Ausführungsform,
- Figur 5: eine prinzipielle Verdeutlichung einer weiteren Ausführungsform,
- Figur 6: eine Draufsicht auf den Räumer und seinen Antrieb,
- Figur 7: einen Vertikalschnitt im Bereich der Mitte des Rundklärbeckens,
- Figur 8: einen Vertikalschnitt durch ein Rundklärbecken mit dem Räumer in einer zweiten Ausführungsform und
- Figur 9: eine Draufsicht auf das Rundklärbecken mit dem Räumer gemäß Fig. 8.

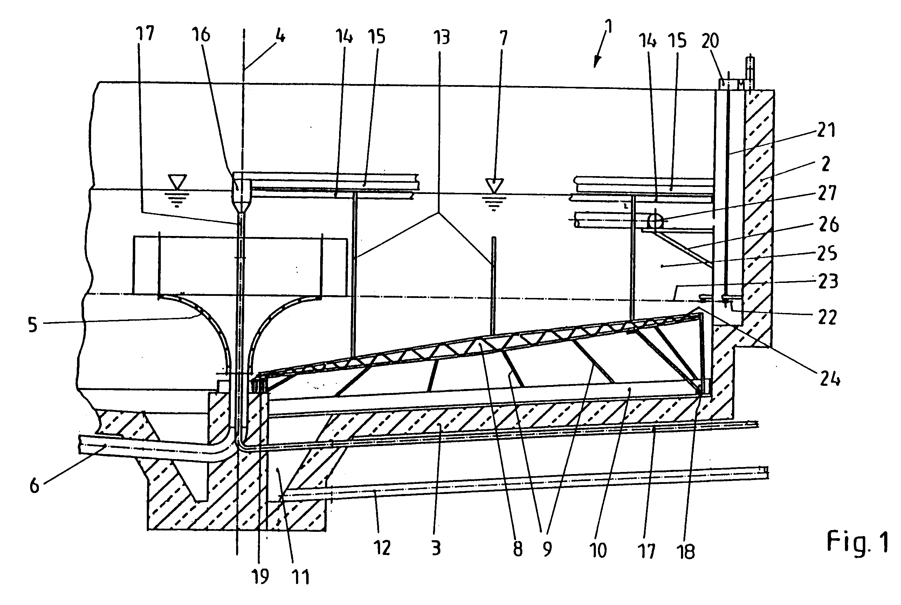

In Figur 1 ist ein Rundklärbecken 1 mit seiner Seitenwandung 2 und der Beckensohle 3 dargestellt, wobei die Beckensohle 3 geneigt oder horizontal verlaufen kann. Es handelt sich um ein rundes Bauwerk mit seiner Mittelachse 4. In der Mitte des Rundklärbeckens, also um die Mittelachse 4 herum, ist ein Einführtrichter 5 vorgesehen, über den die mit Schlamm beladene Flüssigkeit aus einer Leitung 6 in das Rundklärbecken 1 gelangt, wobei sich ein Wasserspiegel 7 einstellt.

Im Innern des Rundklärbeckens 1 ist ein Rahmen 8 unterhalb des Wasserspiegels 7 vorgesehen, der Streben 9 aufweist, die nach unten gerichtet sind und an denen eine Räumeinrichtung 10, beispielsweise in Form eines Räumschildes oder in Form einer als Querfördereinrichtung dienenden Förderschnecke aufgehängt ist. Die Räumeinrichtung 10 hat die Aufgabe, den Sinkschlamm von der Beckensohle 3 aufzunehmen und radial nach innen in einen Trichter 11 zu fördern, aus dem der Sinkschlamm mit Hilfe einer Rohrleitung 12 abgezogen wird.

Der Rahmen 8 weist auch nach oben reichende Streben 13 auf, die ein Schwimmschlammräumschild 14 tragen, welches sich im wesentlichen radial von innen nach außen, also von der Mittelachse 4 in Richtung auf die Seitenwandung 2 des Rundklärbeckens 1 erstreckt. Das Schwimmschlammräumschild 14 ist im wesentlichen unterhalb des Wasserspiegels 7 angeordnet und erfaßt bei seinem Umlauf um die Mittelachse 4 den Schwimmschlamm, der sich oben im Rundklärbecken auf der Flüssigkeit absetzt. Kurz oberhalb des Schwimmschlammräumschildes, jedoch ortsfest am Rundklärbecken 1, ist ein Abstreifschild 15 vorgesehen, dessen untere Kante geringfügig oberhalb der oberen Kante des Schwimmschlammräumschildes 14 angeordnet ist, damit das Abstreifschild 15 den Umlauf des Schwimmschlammräumschildes 14 nicht behindert. Beide Schilde 14 und 15 greifen jedoch in die Decke aus Schwimmschlamm ein, so daß diese beim Umlauf des Schwimmschlammräumschildes 14 entsprechend zusammengeschoben und verdichtet wird. Das Abstreifschild 15 kann im Bereich der Mittelachse 4 auf einem Abzugstrichter 16 für den Schwimmschlamm gelagert sein bzw. diesen Abzugstrichter 16 abstützen. Der Abzugstrichter 16 setzt sich in einer mittig angeordneten Rohrleitung 17 fort, über die der Schwimmschlamm abgeführt wird.

Die Baueinheit aus Rahmen 8, Räumeinrichtung 10 und Schwimmschlammräumschild 14 wird im Rundklärbecken 1 umlaufend um die Mittelachse 4 angetrieben. Sie kann mit einem Rad 18 bzw. mehreren Rädern 18 radial außen im Bereich der Beckensohle 3 abgestützt sein. Auch ein inneres Lager 19 ist zur Führung und Abstützung vorgesehen. Der Antrieb für den Umlauf der Baueinheit wird über einen Motor 20 und eine Welle 21 im Bereich der Innenseite der Seitenwandung 2 nach unten geführt. Von einem auf der Welle 21 sitzenden Zahnrad 22 wird beispielsweise eine nur strichpunktiert angedeutete Endloskette 23 angetrieben, an der der Rahmen 8 über eine Stange 24 angelängt ist. So wird mit einem einzigen Antrieb sowohl der Rahmen 8, die Räumeinrichtung 10 für den Sinkschlamm und auch das Schwimmschlammräumschild 14 umlaufend angetrieben. Der Antrieb kann kontinuierlich oder diskontinuierlich erfolgen.

Der Rahmen 8 weist in seinem radial nach außen gekehrten Bereich einen Freiraum 25 auf. In dem Freiraum 25 ist ortsfest auf Konsolen 26 ein Tauchrohr 27 vorgesehen, welches sich über den Umfang, wie angedeutet, erstreckt und zum Abzug des Klarwassers dient. Es versteht sich, daß die Zufuhr der zu klärenden Flüssigkeit, die Abfuhr des Sinkschlammes, die Abfuhr des Schwimmschlammes und der Abzug des Klarwassers so aufeinander abgestimmt sind, bzw. gesteuert werden, daß sich der Wasserspiegel 7 nicht verändert.

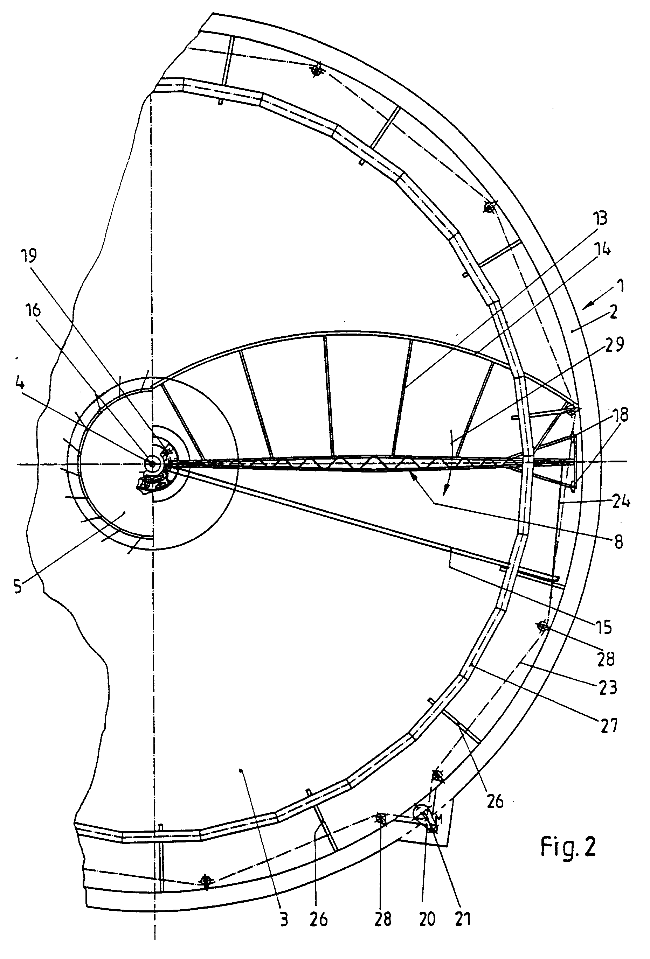

Figur 2 läßt erkennen, wie sich das Tauchrohr 27 über den Umfang des Rundklärbeckens 1 erstreckt. Die Endloskette 23 ist an Führungsrollen 28 geführt und wird über den Motor 20 tangential im Bereich der Innenseite der Seitenwandung 2 des Rundklärbeckens 1 angetrieben. Das Abstreifschild 15, welches ortsfest angeordnet ist, erstreckt sich hier gerade in radialer Richtung von der Mittelachse 4 in Richtung auf die Seitenwandung 2 des Rundklärbeckens. Das diesem Abstreifschild 15 zugeordnete Schwimmschlammräumschild 14 besitzt hier eine gebogene Gestalt, wie dies aus Figur 2 ersichtlich ist. Die Baueinheit aus Rahmen 8, Räumeinrichtung 10 und Schwimmschlammräumschild 14 wird in Richtung des Pfeiles 29 umlaufend angetrieben, wobei das Schwimmschlammräumschild 14 unter dem feststehenden Abstreifschild 15 hindurchläuft. Dabei tritt eine scherenartig radial von außen nach innen gerichtete Überdeckungswirkung zwischen den beiden Schilden 14 und 15 ein, die dazu ausgenutzt wird, den zwischen den Schilden eingeschlossenen Schwimmschlamm zusammenzuschieben und radial von außen in Richtung auf die Mittelachse 4 nach innen zu schieben, so daß der Schwimmschlamm in den Abzugstrichter 16 gelangen kann und damit über die Rohrleitung 17 abgezogen werden kann. Diese radial nach innen gerichtete Förderkomponente tritt nicht nur dann ein, wenn das Schwimmschlammräumschild 14 das Abstreifschild 15 nahezu erreicht hat; die beschriebene Wirkung mit einer nach innen gerichteten Kraftkomponente liegt vielmehr beim gesamten Umlauf des Schwimmschlammräumschildes 14 vor. Sie wird durch das Abstreifschild 15 und dessen Einwirkung jedoch intensiviert. Es ist erkennbar, daß auch in umgekehrter Anordnung das Schwimmschlammräumschild 14 als sich radial gerade erstreckendes Schild ausgebildet sein könnte; in diesem Falle könnte dann das ortsfeste Abstreifschild 15 gekrümmte Form aufweisen, die derart gerichtet sein muß, daß auch hier die beabsichtigte von außen nach innen fortschreitende scherenartige Überdeckungswirkung eintritt. Schließlich ist es noch möglich, beide Schilde 14 und 15 gekrümmt bzw. gebogen auszubilden.

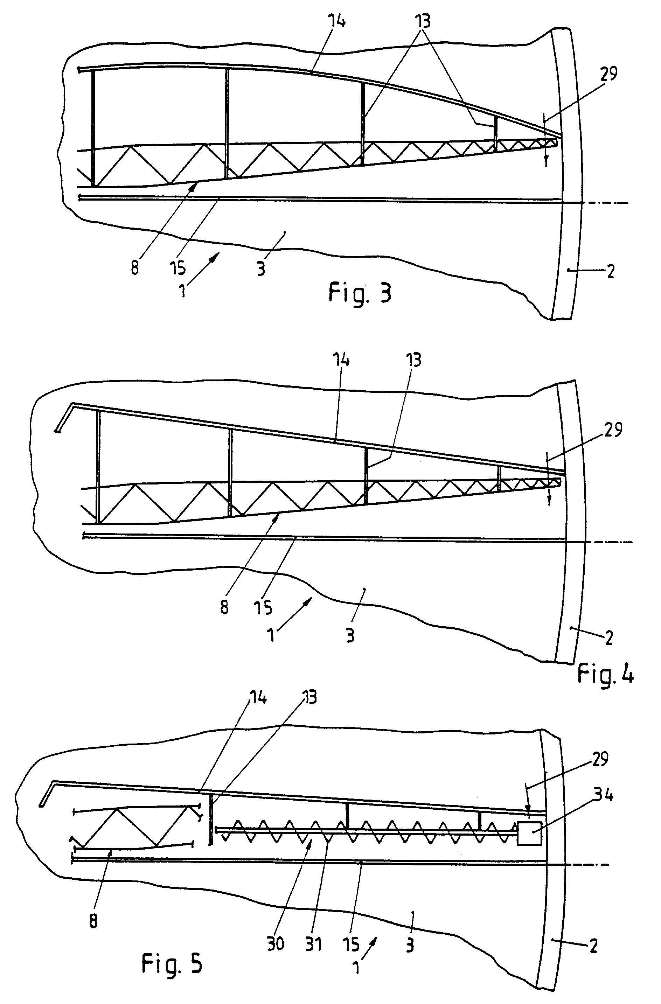

Figur 3 verdeutlicht noch einmal die beschriebene scherenartige Überdeckungswirkung und die Relativanordnung des festen Abstreifschildes 15 und des umlaufend angetriebenen Schwimmschlammräumschildes 14.

Figur 4 zeigt eine ähnliche Darstellung wie Figur 3, wobei jedoch abweichend das Schwimmschlammräumschild 14 nicht gebogen bzw. gekrümmt, sondern winklig ausgebildet ist. Es sind hier mehrere Winkelstücke zu dem Schwimmschlammräumschild 14 zusammengesetzt, so daß hier ebenfalls die beabsichtigte scherenartige Überdeckungswirkung radial von außen nach innen fortschreitend erzielt wird.

Figur 5 zeigt eine weitere Ausführungsform des Räumers in schematisierter Draufsicht. Das an dem Rahmen 8 sitzende Schwimmschlammräumschild ist mit seinem wesentlichen Teil etwa parallel zu dem ortsfesten Abstreifschild 15 ausgerichtet angeordnet. Der Rahmen 8 trägt einen antreibbaren Querförderer 30 mit einer Förderschnecke 31. Aus Übersichtlichkeitsgründen ist der Rahmen 8 und die Förderschnecke 31 nur teilweise dargestellt; tatsächlich erstrecken sich diese jeweils in radialer Richtung durchgehend. Ein Motor 32 dient dem Antrieb der Förderschnecke 31. Der Rahmen 8 wird auch hier umlaufend in Richtung des Pfeiles 29 angetrieben und nach einem Umlauf etwa in der Relativlage, wie sie aus Figur 5 ersichtlich ist, stillgesetzt. Damit entsteht gleichsam ein radialer Kanal zwischen den Schilden 14 und 15, in welchen der Schwimmschlamm zusammengeschoben wurde. Wenn nun die Förderschnecke 31 mit Hilfe des Motors 32 in Gang gesetzt wird, wird eine radial von außen nach innen gerichtete Förderung auf den Schwimmschlamm ausgeübt, so daß dieser ebenfalls in den Abzugstrichter 16 und die Rohrleitung 17 gelangt.

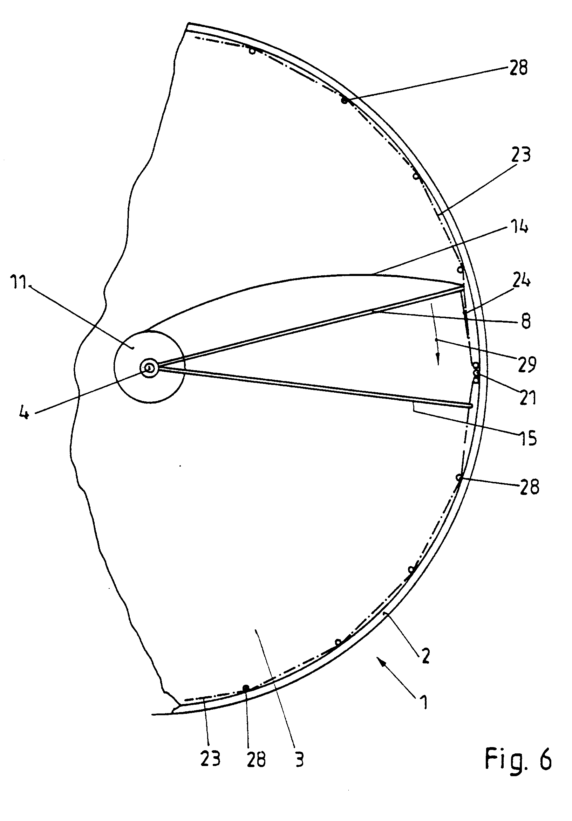

Figur 6 verdeutlicht noch einmal die Relativlage der Schilde 14 und 15 zueinander.

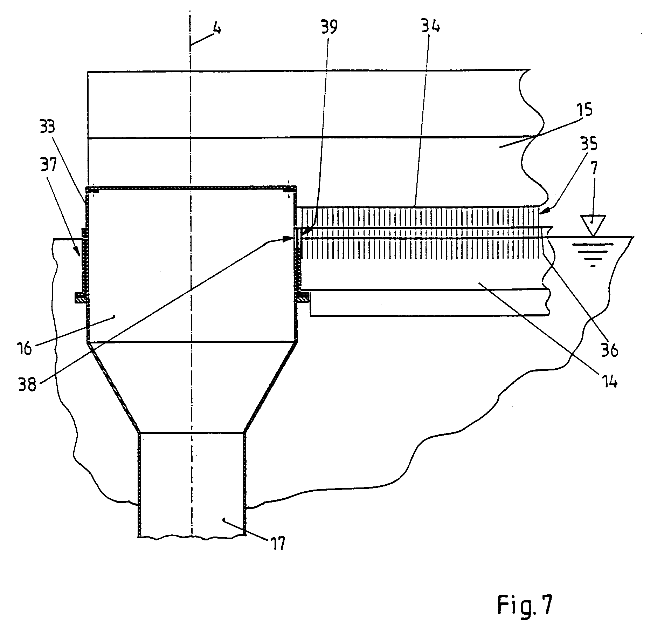

Figur 7 zeigt schließlich zur Verdeutlichung ein Detail im Bereich der Mittelachse 4. Der Abzugstrichter 16 weist ein weitgehend geschlossenes Gehäuse 33 auf, auf dem das Abstreifschild 15 ortsfest gelagert ist. Das Abstreifschild 15 weist im Bereich seines nach unten gekehrten Randes 34 elastische Elemente 35, beispielsweise in Form einer Bürstenleiste oder als elastische vorstehende Finger aus Kunststoff, auf, die über den oberen Rand 36 des Schwimmschlammräumschildes 14 nach unten ragen und diesen Rand 36 damit überdecken. Hieraus wird erkennbar, daß der Schwimmschlamm beim Umlauf des Schwimmschlammräumschildes 14 zwischen diesem und den elastischen Elementen 35 erfaßt und zusammengeschoben wird. Die elastischen Elemente 35 verhindern nicht den Durchlauf des Schwimmschlammräumschildes 14 unterhalb des Abstreifschildes. Es ist vorstellbar, daß die elastischen Elemente 35 auch an dem Schwimmschlammräumschild 14 oder gleichzeitig auch an beiden Schilden 14 und 15 vorgesehen sein könnten, so daß eine noch größere Überdeckung erzielt wird. Es ist gleichzeitig erkennbar, daß eine geringfügige Schwankung des Wasserspiegels 7 sich nicht nachteilig auf die Arbeitsweise der Abfuhr des Schwimmschlammes auswirkt. Das Schwimmschlammräumschild kann vermittels eines Lagers 37 an dem Abzugstrichter 16 geführt sein. In der Wandung des Abzugstrichters 16 ist eine Öffnung 38 vorgesehen, der eine Öffnung 39 in einem Wandungsteil des Schwimmschlammräumschildes 14 zugeordnet ist. Damit wird ein Abzugsventil 38, 39 geschaffen, welches nur über einen gewissen Winkelbereich des Umlaufes des Schwimmschlammräumschildes 14 geöffnet ist, in dem der Durchtritt des Schwimmschlammes erfolgen soll. Über den größten Winkelbereich des Umlaufes ist dagegen das Abzugsventil 38, 39 geschlossen.

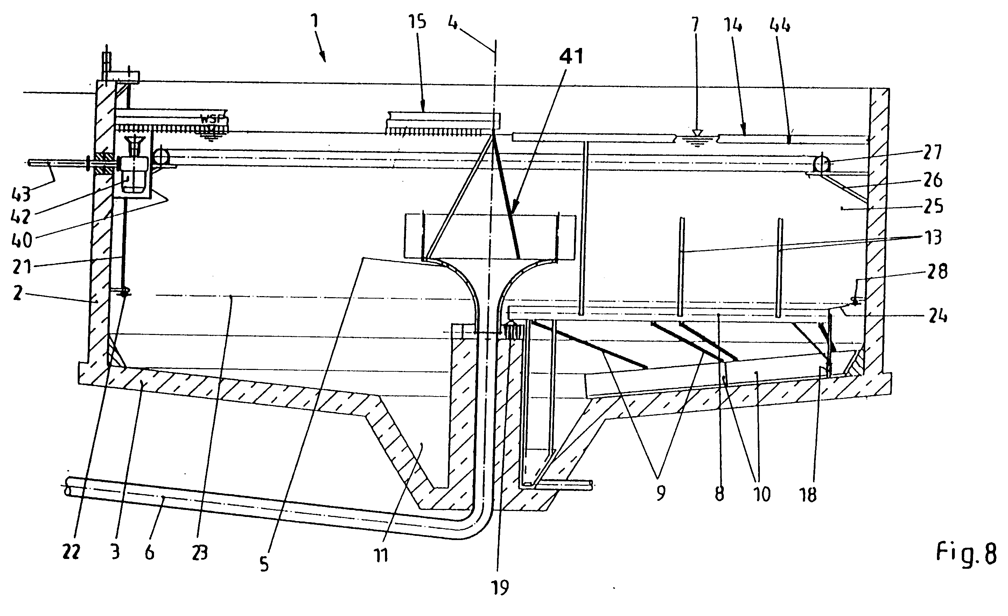

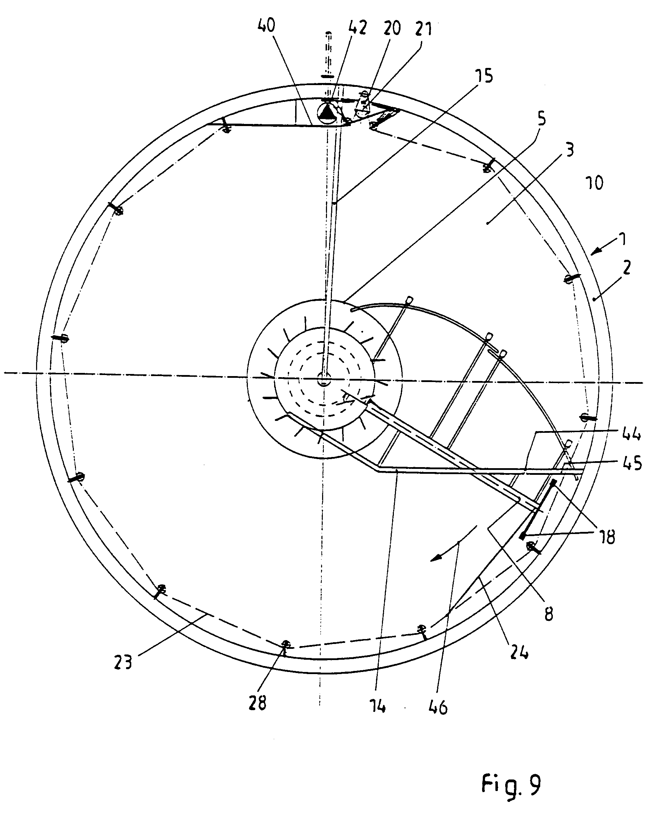

Das in den Figuren 8 und 9 dargestellte Ausführungsbeispiel des Räumers für das Rundklärbecken stimmt in weiten Bereichen mit der Ausführungsform der Figuren 1 - 7 überein. Es weicht jedoch insofern ab, das der Schwimmschlamm nach außen gefördert und außen abgezogen wird.

Das Rundklärbecken 1 besitzt auch hier eine Seitenwandung 2 und eine geneigt angeordnete Beckensohle 3. Das Bauwerk ist im wesentlichen rotationssymmetrisch zu der Mittelachse 4 ausgebildet. In der Mitte, also um die Mittelachse 4 herum, ist ein Einführtrichter 5 für die mit Schlamm beladene Flüssigkeit in das Rundklärbecken 1 vorgesehen. Der Einführtrichter ist nach oben offen. Die Wandung des Einführtrichters 5 ist nach Art einer Coanda-Tulpe ausgebildet und erweitert. Die mit Schlamm beladene Flüssigkeit gelangt über die Leitung 6 und den Einführtrichter 5 in gleichmäßiger Verteilung zu der Mittelachse 4 in das Rundklärbecken 1, wobei sich der Wasserspiegel 7 einstellt. Durch diese mittige Zuleitung der mit Schlamm beladenen Flüssigkeit werden die Sedimentations- und Aufschwimmvorgänge des Sinkschlamms einerseits und des Schwimmschlamms andererseits im Rundklärbecken 1 nicht behindert. Es findet eine gleichmäßige rotationssymmetrische Durchströmung statt.

Auch hier ist eine Baueinheit unter dem Wasserspiegel 7 vorgesehen, die im wesentlichen aus einem Rahmen 8 besteht, an welchem über Streben 9 eine Räumeinrichtung 10 für den Sinkschlamm aufgehängt ist. Es sind hier einzelne Räumschilde erkennbar, die den Sinkschlamm an der Beckensohle 3 radial nach innen in einen Trichter 11 fördern, aus dem der Sinkschlamm mit Hilfe einer Rohrleitung 12 abgezogen wird.

Der unter Wasser angeordnete und gelagerte Rahmen 8 besitzt auch hier nach oben reichende Streben 13, an denen das Schwimmschlammräumschild 14 befestigt ist, welches sich im wesentlichen radial von innen nach außen durchgehend bis zur Seitenwandung 2 des Rundklärbeckens 1 erstreckt. Das Schwimmschlammräumschild 14 ist zu einem wesentlichen Teil unterhalb des Wasserspiegels 7 angeordnet. Kurz oberhalb des Schwimmschlammräumschildes 14 und in Zuordnung zu diesem ist ortsfest auch hier ein radial durchgehendes Abstreifschild 15 vorgesehen, dessen untere Kante mit der oberen Kante des Schwimmschlammräumschildes 14 zusammenarbeitet. Beide Schilde 14 und 15 greifen kammartig in die Decke aus Schwimmschlamm ein, wobei eine scherenartige Überdeckungswirkung zustandekommt. Das Abstreifschild 15 ist im mittleren Bereich, also im Bereich der Mittelachse 4, auf einem Dreibock 41 gelagert, der sich im Bereich des ortsfest angeordneten Einführtrichters 5 abstützen kann. Die Ausbildung eines aufwendigen Mittelbauwerks und die Zugänglichmachung über eine Brücke werden vorteilhaft vermieden. Da hier der Schwimmschlamm nicht radial nach innen, sondern radial nach außen gefördert wird, ist im Bereich der Seitenwandung 2 innen ein Abzugstrichter 40 vorgesehen. Dieser Abzugstrichter 40 ragt vorteilhaft etwas in die von der Seitenwandung 2 umschlossene Kreisfläche ein, wodurch es möglich wird, den Verlauf der Seitenwandung 3 kreisringförmig durchzuziehen. Andererseits ist es natürlich auch möglich, die Seitenwandung 2 mit einer radialen Ausbuchtung zu versehen und in diesem Bereich den Abzugstrichter 40 anzuordnen. In dem Abzugstrichter 40 ist eine Pumpe 42 angeordnet, über die der Schwimmschlamm abgezogen und in eine Rohrleitung 43 überführt wird.

Die Baueinheit aus Rahmen 8, Räumeinrichtung 10 und Schwimmschlammräumschild 14 wird auch hier im Rundklärbecken 1 umlaufend um die Mittelachse 4 angetrieben. Der Rahmen 8 ist unter Wasser gelagert und kann auf einem Rad 18 oder auf mehreren Rädern 18 abgestützt sein. Im Bereich der Mittelachse 4 dient ein inneres Lager 19 zur Führung und Abstützung des Rahmens 8. Der Antrieb für den Umlauf der Baueinheit ist auch hier außen, also im Bereich der Seitenwandung 2 vorgesehen. Zu diesem Zweck ist - zweckmäßig in der Nähe des Abzugstrichters 40 - der Motor 20 (Figur 9) gelagert, von dem die Welle 21 im Bereich der Innenseite der Seitenwandung 2 nach unten geführt ist. Am unteren Ende der Welle 21 sitzt ein Zahnrad 22, welches eine strichpunktiert angedeutete Endloskette 23 antreibt, die sich über den Umfang der Seitenwandung 2 im Bereich der Innenwandung erstreckt und dort in Abständen aufgehängt und geführt ist. Von dieser Endloskette 23 führt eine Stange 24 zu dem Rahmen 8. Der Antrieb kann insbesondere diskontinuierlich erfolgen, wobei auch eine diskontinuierliche Arbeitsweise der Pumpe 42 sinnvoll ist.

Der Rahmen 8 weist auch hier in seinem radial nach außen gekehrten Bereich einen Freiraum 25 auf, der der ortsfesten Unterbringung eines auf Konsolen 26 gelagerten Tauchrohres 27 dient, welches sich über den gesamten Umfang erstreckt und unterhalb des Wasserspiegels 8 angeordnet ist, so daß das Klarwasser über das Tauchrohr 27 unter Vermeidung einer Überlaufrinne abgezogen werden kann.

Das Abstreifschild 15 erstreckt sich geradlinig radial von innen nach außen und ist ortsfest angeordnet. Das Schwimmschlammräumschild 14 besitzt hier einen geknickten Verlauf, um eine scherenartige Überdeckungswirkung in Verbindung mit dem Abstreifschild 15 zu erzielen. Im radial äußeren Endbereich ist das Schwimmschlammräumschild 14 mit Hilfe eines Gelenkes 44 geteilt. Der radial nach außen verlaufende Teil 45 ist mit Hilfe einer nicht dargestellten Feder vorgespannt gelagert, kann aber andererseits beim Umlauf im Bereich des Abzugstrichters 40 nach innen ausweichen, so daß der Umlauf des Schwimmschlammräumschildes 14 nicht behindert wird. Trotzdem wird damit die gesamte Oberfläche des Innenraums des Rundklärbeckens 1 vom Schwimmschlamm geräumt. Es versteht sich, daß das Schwimmschlammräumschild in Richtung des Pfeils 46 umlaufend angetrieben wird. Dem Schwimmschlammräumschild 14 kann zusätzlich auch noch eine Querfördereinrichtung 30 in entsprechender Anordnung zugeordnet sein, wie dies anhand von Figur 5 für das Ausführungsbeispiel der Figuren 1 und 2 erkennbar ist.

### BEZUGSZEICHENLISTE

- 1: - Rundklärbecken
- 2: - Seitenwandung
- 3: - Beckensohle
- 4: - Mittelachse
- 5: - Einführtrichter
- 6: - Leitung
- 7: - Wasserspiegel
- 8: - Rahmen
- 9: - Strebe
- 10: - Räumeinrichtung
- 11: - Trichter
- 12: - Rohrleitung
- 13: - Strebe
- 14: - Schwimmschlammräumschild
- 15: - Abstreifschild
- 16: - Abzugstrichter
- 17: - Rohrleitung
- 18: - Rad
- 19: - Lager
- 20: - Motor
- 21: - Welle
- 22: - Zahnrad
- 23: - Endloskette
- 24: - Stange
- 25: - Freiraum
- 26: - Konsole
- 27: - Tauchrohr
- 28: - Führungsrollen
- 29: - Pfeil
- 30: - Querförderer
- 31: - Förderschnecke
- 32: - Motor
- 33: - Gehäuse
- 34: - Rand
- 35: - elastisches Element
- 36: - Rand
- 37: - Lager
- 38: - Öffnung
- 39: - Öffnung
- 40: - Abzugstrichter
- 41: - Dreibock
- 42: - Pumpe
- 43: - Rohrleitung
- 44: - Gelenk
- 45: - Teil
- 46: - Pfeil

## Patentansprüche

1. Rundklärbecken (1) mit einem Räumer mit einem unterhalb der Oberfläche der mit Schlamm beladenen Flüssigkeit gelagerten Rahmen (8) und einer daran angeordneten, an der Beckensohle (3) entlangstreichenden, sich radial im Rundklärbecken (1) erstreckenden Räumeinrichtung (10) für den Sinkschlamm, und mit einem Antrieb für die Baueinheit aus Rahmen (8) und Räumeinrichtung (10), wobei an der angetriebenen Baueinheit aus Rahmen (8) und Räumeinrichtung (10) auch ein Schwimmschlammräumschild (14) angeordnet ist, ein sich etwa radial erstreckendes Abstreifschild (15) ortsfest am Rundklärbecken (1) vorgesehen ist und das Abstreifschild (15) von oben und das Schwimmschlammräumschild (14) von unten in den Schwimmschlamm unter scherenartiger Überdeckungswirkung kämmend eingreifen und sich die beiden Schilde (14, 15) etwa von der Mitte des Rundklärbeckens (1) in Richtung auf die Seitenwandung (2) erstrecken, **dadurch gekennzeichnet**, daß das Rundklärbecken (1) einen in der Mitte des Rundklärbeckens (1) angeordneten und nach oben offenen Einführtrichter (5) für die mit Schlamm beladene Flüssigkeit aufweist, daß sich die beiden Schilde (14, 15) in radialer Richtung bis zur Seitenwandung (2) des Rundklärbeckens (1) erstrecken, sodaß der Schwimmschlamm auf der gesamten Oberfläche des Rundklärbeckens (1) durch die scherenartige Überdeckungswirkung zwischen dem Schwimmschlammräumschild (14) und dem Abstreifschild (15) zusammengeschoben und in einen Abzugstrichter (16, 40) gefördert wird, und daß der Rahmen (8) der Baueinheit an seinem sich radial nach außen erstreckenden Endbereich einen Freiraum (25) für die ortsfeste Anordnung eines dem Abzug des Klarwassers dienenden Tauchrohres (27) unterhalb des Wasserspiegels (7) aufweist.

2. Rundklärbecken nach Anspruch 1, **dadurch gekennzeichnet**, daß das Schwimmschlammräumschild (14) und/oder das Abstreifschild (15) eine derart gekrümmte oder abgewinkelte Form aufweisen, daß beim Umlauf des Schwimmschlammräumschildes (14) die scherenartige Überdeckungswirkung zwischen den beiden Schilden (14, 15) radial außen am Rundklärbecken (1) beginnt und radial innen endet.

3. Rundklärbecken nach Anspruch 1, **dadurch gekennzeichnet**, daß das Schwimmschlammräumschild (14) und/oder das Abstreifschild (15) eine derart gekrümmte oder abgewinkelte Form aufweisen, daß beim Umlauf des Schwimmschlammräumschildes (14) die scherenartige Überdeckungswirkung zwischen den beiden Schilden (14, 15) radial innen am Rundklärbecken (1) beginnt und radial außen endet.

4. Rundklärbecken nach Anspruch 2 oder 3, **dadurch gekennzeichnet**, daß am Schwimmschlammräumschild (14) und/oder am Abstreifschild (15) an den einander zugekehrten Rändern (35, 36) des jeweiligen Schildes elastische Elemente (35), insbesondere in Form einer Bürste, eine Fingerleiste o.dgl., vorgesehen sind, die den Rand des jeweils anderen Schildes überdecken.

5. Rundklärbecken nach Anspruch 2, **dadurch gekennzeichnet**, daß an dem mittigen Abzugstrichter (16) ein Abzugsventil (38, 39) vorgesehen ist.

6. Rundklärbecken nach einem der Ansprüche 1 bis 5, **dadurch gekennzeichnet**, daß die Baueinheit aus Rahmen (8), Räumeinrichtung (10) für den Sinkschlamm und das Schwimmschlammräumschild (14) einen Zahnkranz, eine Endloskette (23) o. dgl. aufweist, über die der Antrieb von einem oberhalb des Wasserspiegels (7) angeordneten Motor (20) auf die Baueinheit übertragen wird.

7. Rundklärbecken nach einem der Ansprüche 1 bis 6, **dadurch gekennzeichnet**, daß die Baueinheit aus Rahmen (8), Räumeinrichtung (10) für den Sinkschlamm und das Schwimmschlammräumschild (14) auf dem mittigen Einführtrichter (5) geführt ist.

8. Rundklärbecken nach Anspruch 2 oder 3, **dadurch gekennzeichnet**, daß in Umlaufrichtung (29) vor dem Schwimmschlammräumschild (14) ein antreibbarer Querförderer (30) mit einer Förderschnecke (31) auf dem Rahmen (8) vorgesehen ist.

9. Rundklärbecken nach einem der Ansprüche 1 bis 8, **dadurch gekennzeichnet**, daß mehrere ortsfeste Abstreifschilde (15) über das Rundklärbecken (1) verteilt vorgesehen sind.

10. Rundklärbecken nach Anspruch 3, **dadurch gekennzeichnet**, daß das Schwimmschlammräumschild (14) geteilt ausgebildet ist und zur Unterbringung eines Abzugstrichters (40) für den Schwimmschlamm und des Motors (20) mit der Welle (21) im Bereich des äußeren Umfangs des Rundklärbeckens (1) begrenzt ausweichbar ausgebildet ist.

11. Rundklärbecken nach Anspruch 1, **dadurch gekennzeichnet**, daß der Einführtrichter (5) als Coanda-Tulpe ausgebildet ist.

## Claims

1. A circular settlement tank (1) with scraper having a frame (8) arranged beneath the surface of the sludge-containing liquid, a scraping device (10) for the deposited sediment running along the base (3) of the tank and extending radially therein, and a drive for the structural unit comprising the frame (8) and the scraping device (10), and a floating sludge scraper blade (14) on the driven unit consisting of the frame (8) and the scraping device (10), an about radially extending stripping blade (15) fixed on the circular settlement tank (1), whereby the stripping blade (15) penetrates the floating sludge from above and the floating sludge scraper blade (14) penetrates the floating sludge from below by a shearing-like action, and the two blades (14, 15) extend radially from approximately the center of the tank (1) in the direction to the side wall (2), **wherein** the circular settlement tank (1) comprises an open-topped insertion hopper (5) for the sludge-containing liquid arranged in the center of the tank (1), the two blades (14, 15) extend radially from approximately the center of the tank (1) to the side wall (2) so that the floating sludge of the entire surface of the circular settlement tank (1) is collected by the shearing-like action between the floating scraper blade (14) and the stripping blade (15) and conveyed into an extractor hopper (16, 40), and the frame (8) of the structural unit comprises a recess (25), located on the radially extending end portion of the frame, for the fixed arrangement of a submerged pipe (27) positioned below the liquid level (7) and serving for the extraction of the clear liquid.

2. The circular settlement tank of claim 1, **wherein** the floating sludge scraper blade (14) and/or the stripping blade (15) are designed with a curved or angled shape so that the shearing-like coverage effect between the two blades (14, 15) starts from the radial outside of the tank (1) and ends radially inside when the floating sludge scraper blade (14) is driven in rotation.

3. The circular settlement tank of claim 1, **wherein** the floating sludge scraper blade (14) and/or the stripping blade (15) are designed with a curved or angled shape so that the shearing-like coverage effect between the two blades (14, 15) starts from the radial inside of the tank (1) and ends radially outside when the floating sludge scraper blade (14) is driven in rotation.

4. The circular settlement tank of claim 2 or 3, **wherein** elastic elements (35), especially in the form of a brush, a finger-like bar or the like, are arranged on the edges (34, 36) of the floating sludge scraper blade (14) and/or the stripping blade (15) facing toward each other and overlapping the edge of the other blade respectively.

5. The circular settlement tank of claim 2, **wherein** an extractor valve (38, 39) is provided on the extractor hopper (16).

6. The circular settlement tank of one of the claims 1 to 5, **wherein** the structural unit consisting of the frame (8), the scraping device (10) for the deposited sediment, and the floating sludge scraper blade (14) comprises a gear drive, an endless chain (23) or the like, through which the drive is transmitted from a motor (20) located above the liquid level (7) to the unit.

7. The circular settlement tank of one of the claims 1 to 6, **wherein** the structural unit consisting of the frame (8), the scraping device (10) for the deposited sediment, and the floating sludge scraper blade (14) is guided on the insertion hopper (5) positioned in the center of the tank (1).

8. The circular settlement tank of claim 2 or 3, **wherein** a conveyor (30) having a feed screw (31) is arranged on the frame (8) and positioned ahead of the floating sludge scraper blade (14) with respect to the direction (29) of scraper blade rotation.

9. The circular settlement tank of one of the claims 1 to 8, **wherein** several fixed stripping blades (15) are provided on the circumference of the tank (1).

10. The circular settlement tank of claim 3, **wherein** the floating sludge scraper blade (14) is divided and resiliently designed with its portion directed to the outside circumference of the tank (1) serving to locate a funnel (40) for the floating sludge and the motor (20) with the shaft (21).

11. The circular settlement tank of claim 1, **wherein** the insertion hopper (5) is designed in form of a COANDA-cone.

## Revendications

1. Bassin de décantation circulaire (1) comprenant un racloir qui comporte un châssis (8) monté au-dessous de la surface du liquide chargé de boues et un dispositif de raclage (10) pour les boues sédimentées, disposé sur ce châssis, passant sur le fond (3) du bassin et s'étendant radialement dans le bassin de décantation circulaire (1), et comprenant un dispositif d'entraînement pour l'unité de construction constituée du châssis (8) et du dispositif de raclage (10), une lame de raclage (14) des boues flottantes étant disposée aussi sur l'unité de construction entraînée constituée du cadre (8) et du dispositif de raclage, une laine d'enlèvement (15) s'étendant à peu près radialement étant prévue fixe sur le bassin de décantation circulaire (1) cette lame d'enlèvement (15) agissant par en haut et la lame de raclage (14) des boues flottantes agissant par en bas sur les boues flottantes avec un effet de recouvrement du type ciseaux, et les deux lames (14, 15) s,étendant à peu près à partir du milieu du bassin de décantation circulaire (1) en direction de da paroi latérale (2), caractérisé en ce que le bassin de décantation circulaire (1) comporte une trémie de chargement (5) disposée au milieu du bassin de décantation circulaire (1) et ouverte vers le haut pour le liquide chargé de boues, en ce que les deux lames (14, 15) s'étendent radialement jusqu'à la paroi latérale (2) du bassin de décantation circulaire (1), de sorte que les boues flottantes sont rassemblées et poussées sur toute la surface du bassin de décantation circulaire (1) par l'action de recouvrement du type ciseaux, entre la lame de raclage (14) des boues flottantes et la lame d'enlèvement (15) et sont acheminées dans le cône de soutirage (16, 40), et en ce que le châssis (8) de l'unité de construction présente, dans sa zone d'extrémité s'étendant radialement vers l'extérieur, un espace libre (25) pour disposer fixement un tube plongeur (27) servant an soutirage de l'eau clarifiée au-dessous du niveau d'eau (7).

2. Bassin de décantation circulaire selon la revendication 1, caractérisé en ce que la lame de raclage (14) des bornes flottantes et/ou la lame d'elèvement (15) présente une forme courbée ou coudée telle que lors de la rotation de la lame de raclage (14) des boues flottantes, l'action de recouvrement du type ciseaux entre les deux lames (14, 15) commence radialement sur le pourtour extérieur du bassin de décantation circulaire (1) et se termine radialement à l'intérieur.

3. Bassin de décantation circulaire selon la revendication 1, caractérisé en ce que la lame de raclage (14) des boues flottantes et/ou la lame d'enlévement (15) présente une forme courbée ou coudée telle que lors de la rotation de la lame de raclage (14) des boues flottantes, l'action de recouvrement du type ciseaux entre les deux lames (14, 15) commence radialement à l'intérieur dans le bassin de décantation circulaire (1) et se termine radialement sur son pourtour extérieur.

4. Bassin de décantation circulaire selon la revendication 2 ou 3, caractérisé en ce que sur la lame de raclage (14) des boues flottantes et/ou sur la lame d'enlèvement (15) sont prévus, sur les bords (35, 36) tournés l'un vers l'autre de la lame considérée, des éléments (35) élastiques, en particulier sous la forme d'une brosse, d'une baguette à doigts ou similaire, qui recouvrent le bord de l'autre lame.

5. Bassin de décantation circulaire selon la revendication 2, caractérisé en ce qu'une vanne de soutirage (38, 39) est prévue sur le cône de soutirage (16) central.

6. Bassin de décantation circulaire selon l'une des revendications 1 à 5, caractérisé en ce que l'unité de construction constituée du châssis (8), du dispositif de raclage (10) pour les boues sédimentées et de la laine de raclage (14) des boues flottantes, comporte une couronne dentée, une chaîne sans fin (23) ou similaire, par laquelle l'entraînement d'un moteur (20) disposé au-dessus du niveau d'eau (7) est transmis à l'unité de construction.

7. Bassin de décantation circulaire selon l'une des revendications 1 à 6, caractérisé en ce que l'unité de construction constituée du châssis (8), du dispositif de raclage (10) pour les boues sédimentées et de la lame de raclage (14) des boues flottantes, est guidée sur la trémie de chargement (5) centrale.

8. Bassin de décantation circulaire selon la revendication 2 ou 3, caractérisé en ce qu'un transporteur transversal (30), entraînable, muni d'une vis sans fin de transport (31), est prévu sur le cadre (8), devant la lame de raclage (14) des boues flottantes en considérant le sens de rotation (29).

9. Bassin de décantation circulaire selon l'une des revendications 1 à 8, caractérisé en ce que plusieurs lames d'enlèvement (15) fixes sont prévues de manière répartie sur le bassin de décantation circulaire (1).

10. Bassin de décantation circulaire selon la revendication 3, caractérisé en ce que la lame de raclage (14) des boues flottantes est réalisée en plusieurs parties et petit s'écarter de manière limitée pour loger un cône de soutirage (40) des boues flottantes ainsi que le moteur (20) avec l'arbre (21), dans la zone du pourtour extérieur du bassin de décantation circulaire (1).

11. Bassin de décantation circulaire selon la revendication 1, caractérise en ce que la trémie de chargement (5) est une tulipe Coanda.
